# EUROPÄISCHE PATENTSCHRIFT

(11) **EP 0 874 974 B1**
(45) Veröffentlichungstag und Bekanntmachung des Hinweises auf die Patenterteilung: **02.05.2003**
(21) Anmeldenummer: 97900596.4
(22) Anmeldetag: 11.01.1997
(51) Int. Cl.: G01D 5/347, B62D 15/02

(54) **AUFBAU EINES LENKWINKELSENSORMODULS**
STRUCTURE OF A STEERING-ANGLE SENSOR MODULE
STRUCTURE D'UN MODULE CAPTEUR D'ANGLE DE BRAQUAGE

(30) Priorität: 20.01.1996 DE 19601964
(43) Veröffentlichungstag der Anmeldung: 04.11.1998
(73) Patentinhaber: Valeo Schalter und Sensoren GmbH, 74321 Bietigheim-Bissingen (DE)
(72) Erfinder: WEBER, Petra, D-74321 Bietigheim-Bissingen (DE)
(74) Vertreter: Dreiss, Fuhlendorf, Steimle & Becker
(86) Internationale Anmeldenummer: EP9700111
(87) Internationale Veröffentlichungsnummer: WO97026506

(56) Entgegenhaltungen:
- DE-C- 4 300 663
- US-A- 5 004 915
- PATENT ABSTRACTS OF JAPAN vol. 9, no. 334 (P-417) [2057] , 27.Dezember 1985 & JP 60 158313 A (TOYOTA JIDOSHA K.K.), 19.August 1985,
- PATENT ABSTRACTS OF JAPAN vol. 9, no. 137 (P-363) [1860] , 12.Juni 1985 & JP 60 018707 A (JIDOSHA KIKI K.K.), 30.Januar 1985,

## Beschreibung

Die Erfindung betrifft ein Modul eines Lenkwinkelsensors mit den Merkmalen des Oberbegriffs des Anspruchs 1.

Lenkwinkelsensoren werden benötigt zur Gierwinkelsteuerung von Fahrzeugen, mit der dem Ausbrechen eines Fahrzeugs beispielsweise in einer glatten Kurve entgegengewirkt werden soll. Derartige Regeleinrichtungen erfordern die Kenntnis des augenblicklich bei den Vorderrädern eingestellten Lenkwinkels, aus dem zusammen mit anderen Parametern das Fahrverhalten des Fahrzeugs bestimmt und geregelt wird. Bei derartigen Sensoren ist vielfach eine Code-Scheibe vorgesehen, die mit dem Lenkrad zumindest indirekt gekoppelt ist, so daß die Stellung des Lenkrades direkt anhand des zugeordneten Codes an der Code-Scheibe abgelesen werden kann. Die Arbeitsweise einer derartigen Code-Scheibe ist bereits anhand der DE-A-195 32 903 (veröffentlicht 13,3,97) beschrieben worden. Derartige Code-Scheiben arbeiten verhältnismäßig genau, was auch für eine exakte Regelung notwendig ist. Andererseits wird man die Abtasteinrichtung des Lenkwinkelsensors gern in die Leiterplatte des Sensors integrieren, um hier eine einfache und kostengünstige Ausgestaltung zu erhalten. Weiterhin ist es sehr wichtig, daß die Abstände zwischen dem Abtaster und der den Code tragenden Code-Scheibe genau eingehalten werde, um Meßwertverfälschungen zu vermeiden. Eine Möglichkeit hierzu besteht darin, Code-Scheibe und Abtasteinrichtung auf einer Baugruppe zu vereinen und diese dann komplett in dem Gehäuse zu montieren. Eine derartige Maßnahme ist allerdings vergleichsweise aufwendig. Wird nur die Code-Scheibe auf einer eigenen Montageplatte drehbar gelagert und diese dann ins Gehäuse eingebaut, so ist weiterhin zu beachten, daß sich die Toleranzen von Grundplatte und Leiterplatte bzw. Montageplatte des Abtasters addieren.

Aus der US-A-5,004,915 ist ein Lenkwinkelsensor bekannt geworden, bei dem die Codescheibe drehbar gelagert ist. Aus der JP-A-60 158 313 ist ein Lenkwinkelsensor mit drehbeweglich abtastbaren Merkmalen bekannt geworden. Ein optischer Lenkwinkelsensor ist aus der DE-C-43 00 663 bekannt. Bei diesem Sensor befindet sich die Codeblendenanordneung mit Lichtschrankeneinheiten in einem Gehäuse. Die JP-A- 60 18 707 zeigt einen Lenkwinkelsensor mit einem beweglichen Ringteil mit fotoelektrisch abtastbaren Schlitzen.

Aufgabe der Erfindung ist es, die für den Sensor benötigten Bauteile und Baugruppen einfach und kostengünstig in dem zugehörigen Gehäuse zu montieren.

Diese Aufgabe wird durch ein Modul gelöst, das die Merkmale des Anspruchs 1 aufweist.

Die Erfindung besteht im Prinzip also darin, die Code-Scheibe in dem Gehäuse direkt drehbar zu lagern. Hierdurch ist es möglich, für eine sehr genaue Justage der Code-Scheibe zu sorgen. Insbesondere für den in der Praxis gegebenen Fall, daß die Lage der Code-Scheibe durch die exakte Ausrichtung des Code-Scheibenantriebs gegenüber einer Antriebslasche sehr genau hergestellt werden muß, ergeben sich durch die Erfindung große Vorteile, da die Lage des Gehäuses durch die erzwungene Lage der Code-Scheibe festgelegt ist.

Eine besonders einfache Lagerungsmöglichkeit für die Code-Scheibe direkt am Gehäuse ergibt sich durch die Lage des Lenkrads, welche die Code-Scheibe direkt oder indirekt antreibt, wodurch zum einen die Lage des Gehäuses des Sensormoduls vorgegeben ist. Der zum Lenkrad reichende Lenkstock muß andererseits Raum erhalten, um die Verbindung zwischen Lenkstange und Lenkgestänge schaffen zu können. Um kurze Wege zwischen dem Antrieb und der Lagerung der Code-Scheibe zu erhalten, ist es daher besonders günstig, die Lagerung am Rand der Durchtrittsöffnung des Lenkstocks durch das Gehäuse vorzusehen. Hierzu wird am Rand der Durchtrittsöffnung im Gehäuseboden eine Ringwand hochgezogen, die die Deckelfläche der Code-Scheibe im Abstand zu dem Gehäuseboden hält, so daß Platz für die Codeverzahnung bleibt, die sich vorzugsweise von der Deckelfläche der Code-Scheibe in axialer Richtung zum Gehäuseboden hin erstreckt. Andererseits ist die Lage der Code-Scheibe eindeutig gegenüber dem Gehäuseboden festgelegt, da die Federarme die Code-Scheibe federn im Eingriff mit der Ringwand des Gehäusebodens halten.

Um nun auch den Abtaster in seiner Lage der Code-Scheibe eindeutig zuzuordnen, empfiehlt sich in Weiterbildung der Erfindung die Maßnahme nach Anspruch 2. Da der Abtaster nunmehr eindeutig mit dem Gehäuse verknüpft ist, liegt auch die Lage zur Code-Scheibe eindeutig fest, da beide direkt mit dem Gehäuse verbunden sind.

Um ein Verlieren der Code-Scheibe gegenüber dem Gehäuseboden zu verhindern, empfiehlt sich in Weiterbildung der Erfindung die Merkmalskombination nach Anspruch 3. Danach werden beim Einfügen der Code-Scheibe in den Gehäuseboden die Federarme durch die Ringwand ausgelenkt, bis sie schließlich mit ihren Rasthaken die Kante der Federwand hintergreifen. Die Federarme verlaufen im entspannten Zustand vorzugsweise parallel zur Drehachse der Code-Scheibe und werden nur beim Einbau etwas ausgelenkt, um den Rasthaken Platz zu schaffen, durch die kreisförmige Öffnung treten zu können. Die Nut gemäß Anspruch 3 ist dabei zum Gehäuseboden hin und zu der kreisförmigen Öffnung hin offen, so daß sie eine L-förmige Kontur besitzt, die am Gehäuseboden umläuft.

Um sowohl die Rastverbindung der Code-Scheibe im Gehäuse als auch den Antrieb der Code-Scheibe einfach auszugestalten, empfiehlt sich in Weiterbildung die Merkmalskombination nach Anspruch 4. Danach besitzt die Code-Scheibe eine etwas kleinere kreisförmige Öffnung als der Gehäuseboden, so daß sich die Federarme parallel zu der der Öffnung zugewandten Innenfläche der Ringwand erstrecken. Von der Kante der Code-Scheibenöffnung gehen aber nicht nur die Federarme ab, sondern auf ihr stehen auch etwa gleich hohe Tragwände, die Ösen tragen, über welche die Code-Scheibe zumindest indirekt von dem Lenkrad angetrieben wird.

Um den optischen Abtaster gegenüber den die Codierung bildenden Zähnen der Code-Scheibe einfach zu zentrieren, empfiehlt sich in Weiterbildung der Erfindung die Merkmalskombination nach Anspruch 5. Da die Code-Scheibe direkt an einer Lagerstelle in dem Gehäuseboden angreift, ist es somit vorteilhaft, auch den Abtaster über Zentrierstifte entsprechend Anspruch 2 (bzw. durch andere Zentriermittel) des Gehäuses in seiner Lage auszurichten. Gemäß den Merkmalen nach Anspruch 52 sind die Bauelemente des Abtasters in einer gemeinsamen Fassung zueinander und damit über den Gehäuseboden auch gegenüber den codierten Zähnen der Code-Scheibe justiert. Die Bauelemente des Abtasters sind daher durch die ihnen zugeordneten Buchten fest zueinander ausgerichtet und durch die in die Nuten reichenden Schlitze optisch miteinander gekoppelt. In dieser Nutbahn bewegen sich dann kreisförmig hintereinander die rechteckförmigen Codierzähne, die abgetastet werden und wodurch somit die Lage der Code-Scheibe bestimmt wird.

Um auch die Leiterplatte der Code-Scheibe beidseitig bestücken zu können, empfehlen sich in Weiterbildung der Erfindung die Maßnahmen nach Anspruch 6. Dies gilt insbesondere für den Fall, daß die Abtastelemente des Abtasters in die Leiterplatte integriert sind. Der Abstand der Leiterplatte zum Gehäuseboden schafft andererseits den notwendigen Raum, um die Leiterplatte ggf. beidseitig bestücken zu können. In der Praxis hat sich aber bewährt, die Leiterplatte einseitig zu bestücken und auf der gegenüberliegenden Seite die Verbindungen mit den Leiterzügen auf der Leiterplatte zu verlöten. Dabei liegen die Kontaktstücke und der Kontaktring des Schrittschalters (DE-A-196 02 060, veröffentlicht 24,7,97) auf der gleichen Seite, auf der auch die Kontaktstellen verlötet werden.

Will man die Fassung des Abtasters als getrennt montierbare Einheit ausgestalten, so daß sie leicht ausgetauscht oder beim Zusammenbau angepaßt werden kann, so empfiehlt sich in Weiterbildung der Erfindung die Merkmalskombination nach Anspruch 7, da auch in diesem Fall eine feste Zuordnung zwischen der Lage des Abtastes und der Lage der Code-Scheibe innerhalb des Gehäuses möglich ist.

Ein Ausführungsbeispiel der Erfindung wird nachfolgend anhand der Zeichnung erläutert. Darin zeigt:
- Fig. 1: eine perspektivische Ansicht in den geöffneten Gehäuseboden mit montierter Code-Scheibe;
- Fig. 2: einen Schnitt durch das Gehäuse mit einem aufgesetzten Übertragungsmodul zum Antrieb der Code-Scheibe;
- Fig. 3: in perspektivischer Ansicht von unten gesehen den Gehäuseboden mit eingerasteter Code-Scheibe; und
- Fig. 4 bis 6: eine Draufsicht, eine Seitenansicht und eine von unten gesehene Ansicht des Gehäuses für den Lenkwinkelsensor.

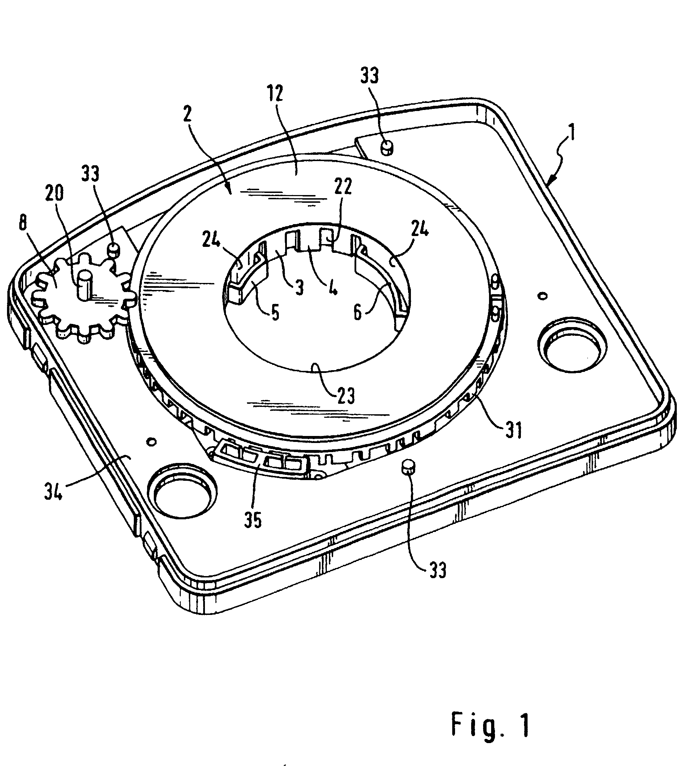

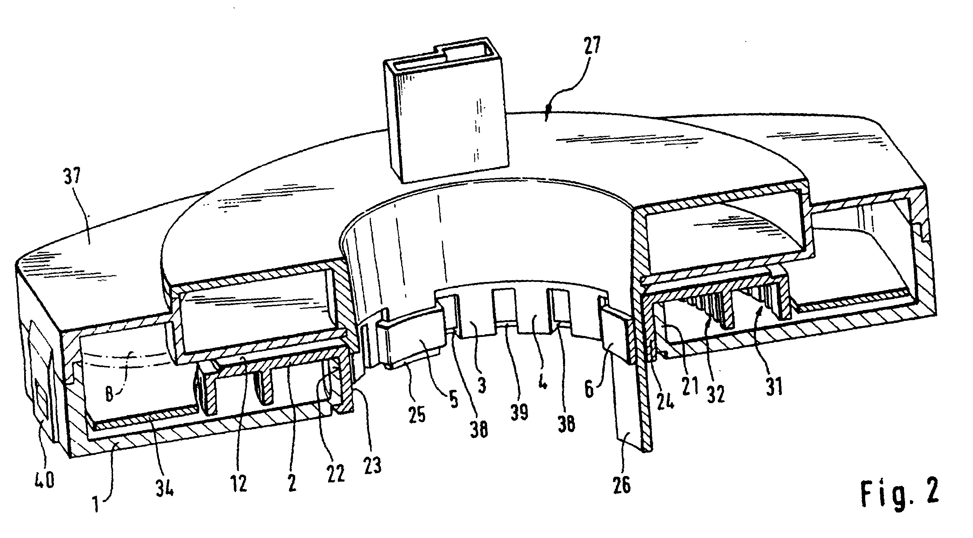

In Fig. 1 ist der geöffnete Gehäuseboden zu erkennen, in dem die Code-Scheibe 2 drehbar gelagert ist. Dabei stützt sich die Code-Scheibe an einer Gehäuseringwand 21 (siehe Fig. 2) ab, welche eine kreisförmige Öffnung 22 in dem Gehäuse 1 begrenzt. Die Abstützung an der Gehäuseringwand geschieht durch die Code-Scheibe dabei sowohl in radialer als auch in axialer Richtung, da die Code-Scheibe 2 mit ihrer Deckelfläche 12 auf der Stirnkante der Gehäuseringwand aufliegt. Weiterhin besitzt die Code-Scheibe 2 ebenfalls einen Kreisdurchbruch 23, der etwas kleiner als die Kreisöffnung 22 ist. Vom Rand dieses Kreisdurchbruches gehen Federarme (beispielsweise die Federarme 3,4) axial nach unten und lehnen sich dabei gegen die der Kreisöffnung 22 zugewandten Fläche der Gehäuseringwand 21, so daß die Code-Scheibe auch in radialer Richtung gesichert ist. Die federnden Radarme sind an ihren freien Enden mit nicht dargestellten, radial nach außen weisenden Rasthaken versehen, welche die untere Kante der Trennwand 21 hintergreifen und somit die Code-Scheibe auch in axialer Richtung sichern. Zwischen die Rastarme 4 sind auch noch Tragwände 24 eingefügt, die auf dem gleichen Kreisumfang wie die Rastarme liegen und etwa die gleiche Länge wie die Federarme haben, aber erheblich breiter als diese sind. Diese somit nicht federnden Trägerwände tragen Transportösen 5,6, über welche die Codescheibe indirekt durch das Lenkrad angetrieben wird, indem Transportlaschen 25,26 einer durch das Lenkrad angetriebenen drehbaren Übertragungseinheit die Code-Scheibe zu einer Drehbewegung antreiben.

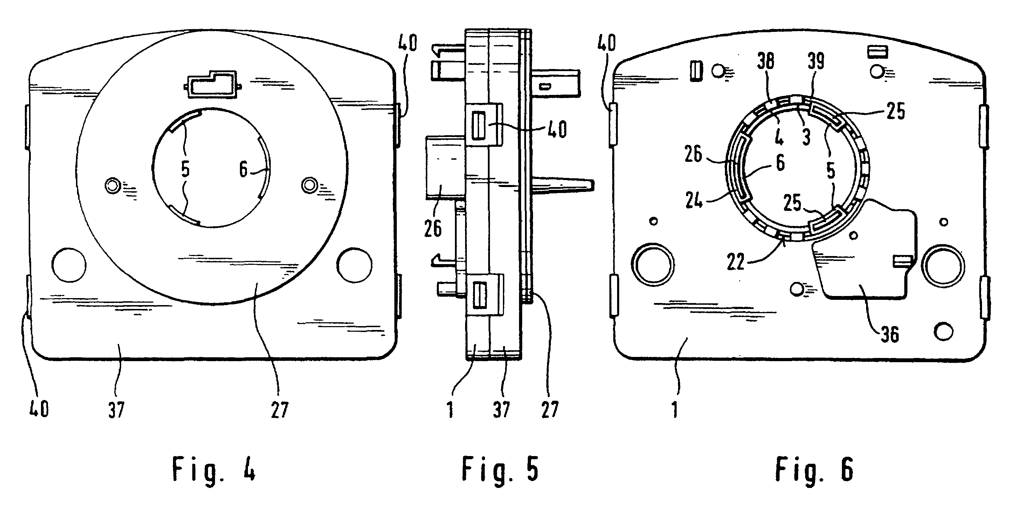

An ihrem äußeren Rand und auf einem radial weiter innen liegenden Inkrementalkreis sind einmal eine Codespur und eine Inkrementalspur an der Code-Scheibe angebracht, wobei die Codespur 31 nach unten ragende Zähne aufweist, welche in Form eines Codes die Drehlage der Code-Scheibe 2 beschreiben, während die im gleichen Abstand zueinander angeordneten, nach unten weisenden Zähne der Inkrementalspur 32 zur Bestimmung von augenblicklichen Lageänderungen dienen. Die Arbeitsweise der Code-Scheibe ist bereits in der DE-A-195 32 903 beschrieben. Über gestufte Zentrierstifte 33 (siehe Fig. 1) ist eine Leiterplatte 34 im Abstand gegenüber dem Gehäuseboden fixiert, wobei die Leiterplatte die äußere Kontur der Code-Scheibe etwa bogenförmig umfaßt. Durch nicht dargestellte Zentrierstifte ist eine nur symbolisch angedeutete Fassung 35 gegenüber dem Gehäuseboden 1 fixiert, wobei die Fassung sowohl die Lichtsender als auch Lichtempfänger zur Abtastung der Code-Scheibe besitzt. Die Fassung ist in eine eine entsprechende Kontur in dem Gehäuseboden aufweisende Bucht eingelassen und ist mit kreissektorförmigen Nuten versehen, die die Inkrementalzähne bzw. Codezähne beim Drehen der Code-Scheibe 2 passieren. Die Lagebestimmung der Code-Scheibe 2 geschieht durch die Änderung des Lichtstroms zwischen Lichtsendern und -empfängern aufgrund der diese passierenden Codier- und Inkrementalzähne. In Fig. 6 ist die sich nach unten herauswölbende Bucht 36 zur Aufnahme der Fassung 35 dargestellt. Die Bucht ermöglicht es, daß der Boden der kreissektorförmigen Nuten in der Fassung 35 niedriger als die offenen Enden der diese Nuten passierenden Zähne der Code-Scheibe 2 liegt, wobei die Code-Scheibe ziemlich flach gehalten werden kann.

In Fig. 1 ist noch ein zu einem Schrittschalter gehörendes Schaltrad 8 gezeigt, welches bereits im Zusammenhang mit der DE-A-196 01 965 (veröffentlicht 24,7,97) beschrieben wurde. Die mit dem Schaltrad 8 fest verbundene Drehwelle 20 ist durch die Leiterplatte 34 ragend in einer Lageröffnung im Gehäuse drehbar gelagert. Das dem Betrachter zugewandte obere Ende der Lagerwelle 20 ist dementsprechend in dem auf den Gehäuseboden aufgesetzten Gehäusedeckel 37 gelagert.

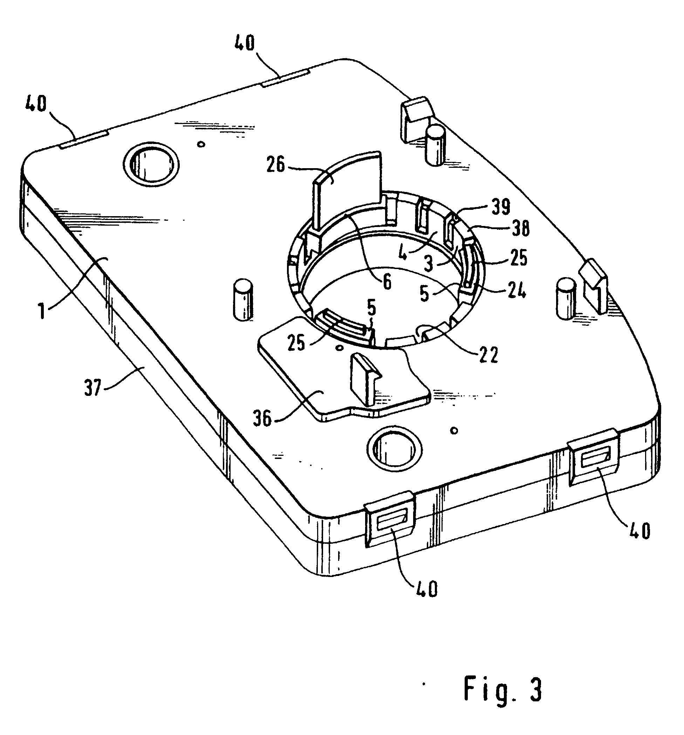

Fig. 3 zeigt den Gehäuseboden 1 von unten gesehen. Aus dieser Sicht sind die Rastarme 4 gut zu erkennen, die über Rasthaken 38 in eine umlaufende offene Nut 39 am unteren Rand der Kreisöffnung 22 angreifen und so die Code-Scheibe in axialer Richtung gegenüber dem Gehäuseboden 1 sichern. Die Transportösen 5 und 6 haben ebenso wie die zugehörigen Transportlaschen 25,26 eine unterschiedliche Breite, so daß die Lage der Code-Scheibe 2 gegenüber den Transportlaschen festgelegt ist, wobei die zwei Ösen 5 bzw. zwei Laschen 25 schmaler als die Öse 6 bzw. die Lasche 26 sind. Im Rahmen der vorliegenden Erfindung ist es nicht notwendig, daß die Codespur über die Laschen 25,26 der Übertragungseinheit 27 transportiert wird. Es kann vielmehr auch ein direkter Antrieb durch das Lenkrad erfolgen. Der Gehäuseboden 1 wird wie aus Fig. 3 ersichtlich mittels Rastfedern 40 verrastet. Der Gehäusedeckel 37 ist nach innen gestuft, um so in Verbindung mit der Übertragungseinheit 27 den Aufnahmeraum für diese Einheit zu schaffen, so daß der Gehäusedeckel 37 gleichzeitig Gehäuseboden für die Übertragungseinheit 27 bildet. Diese Konstruktion ist im Zusammenhang mit der vorliegenden Erfindung nicht zwingend und wird in der DE-A-196 02 060 getrennt beschrieben.

Um zusammen mit der Fassung des Abtasters auch die zugehörige elektronische Schaltung auswechseln zu können, kann es sich empfehlen, der Fassung einen Leiterplattenanteil zuzuordnen, der getrennt in die Bucht 36 der Fassung eingelegt wird, so daß Fassung und Leiterplattenanteil übereinander liegen.

## Patentansprüche

1. Modul eines Lenkwinkelsensors mit einem Gehäuse mit einem ersten Gehäuseteil, insbesondere Gehäuseboden (1), einem zweiten Gehäuseteil, insbesondere Gehäusedeckel (37), und einer im Gehäuse angeordneten drehbaren Code-Scheibe (2), einer elektrischen Schaltung (34) sowie mindestens einem die Code-Scheibe (2) abtastenden Abtaster (35), **dadurch gekennzeichnet, daß** die Code-Scheibe (2) im Abstand zum ersten Gehäuseteil (1) an diesem drehbar und direkt gelagert ist und das erste Gehäuseteil (1) eine kreisförmige Öffnung (22) besitzt, an deren Rand eine Ringwand (21) in das Gehäuseinnere weist, daß die Code-Scheibe (2) sich an der ins Gehäuseinnere weisenden Stirnfläche der Ringwand (21) abstützt und daß von der Code-Scheibe (2) abstehende Rastarme (4) über die Ringwand (21) mit radial nach außen weisenden Rasthaken (38) an der Außenfläche (39) des ersten Gehäuseteils (1) angreifen.

2. Modul nach Anspruch 1, **dadurch gekennzeichnet, daß** der Abtaster (35) in eine fest mit dem ersten Gehäuseteil (1) verbundene Fassung eingefügt ist.

3. Modul nach Anspruch 1 oder 2, **dadurch gekennzeichnet, daß** die Ringwand (1) mit einer umlaufenden Nut (39) versehen ist, in die die Rasthaken (38) eingreifen.

4. Modul nach einem der vorangegangenen Ansprüche, **dadurch gekennzeichnet, daß** die kreisförmige Code-Scheibe (2) einen der Bodenöffnung (22) entsprechenden zentralen Kreisdurchbruch (23) besitzt, von dessen Rand die Rastarme (4) abstehen, wobei zwischen den in Gruppen auf dem kreisförmigen Rand des Durchbruchs angeordneten Rastarmen kreissektorförmige Tragwände (24) stehen, die kreissektorförmige, in die Kreisöffnung (22) ragende Transportösen (4,5) tragen.

5. Modul nach einem der Ansprüche 2 bis 4, **dadurch gekennzeichnet, daß** die Fassung (35) des Abtasters mehrere Lichtquellen und mehrere diesen zugeordnete Detektoren in Aufnahmebuchten aufnimmt, die in drei Reihen kreissektorförmig angeordnet sind, daß die Fassung (35) in Wänden der Aufnahmebuchten schlitzförmige Öffnungen zum Senden bzw. Empfangen von Lichtstrahlung besitzen und daß die Fassung (35) kreissektorförmige, an den Stirnflächen offene Nuten aufweist, in die die einander radial gegenüberliegenden Öffnungen münden und welche sich kreisförmig bewegende Vorsprünge (31,32) der Code- bzw. Inkrementalspur der Code-Scheibe (2) aufnehmen.

6. Modul nach einem der vorangegangenen Ansprüche, **dadurch gekennzeichnet, daß** an einem Gehäuseboden (1) gestufte Zentrierstifte (33) vorgesehen sind, über welche die die Code-Scheibe umgebende Leiterplatte (34) zentriert und im Abstand zum Gehäuseboden (1) gehalten ist.

7. Modul nach einem der vorangegangenen Ansprüche, **dadurch gekennzeichnet, daß** in einen Gehäuseboden (1) eine Bucht (36) eingeformt ist, in der die eine den Lichtquellen und Detektoren zuordenbare Leiterplatte und die Fassung (35) zentriert stapelbar sind und wobei vorzugsweise die Fassung (35) und/oder die Leiterplatte durch die Buchtwände zusätzlich zentrierbar sind.

## Claims

1. A module of a steering angle sensor comprising a first housing section, in particular, a housing bottom (1), a second housing section, in particular a housing lid (37), a rotatable code disk (2) disposed within the housing, an electric circuit (34) and at least one scanner (35) scanning the code disk, **characterized in that** the code disk (2) is rotatably arranged directly on the first housing section (1) in spaced relationship therefrom and that the first housing section includes a circular hole (22) on the edge of which a ring wall (21) faces the interior of the housing, that the code disk (2) is supported on the front face of the ring wall (21) facing the interior of the housing, and that locking struts (4) projecting from the code disk (2), via ring wall (21), by radially outwardly extending locking hooks (38), engage the outer face (39) of the first housing section (1).

2. A module according to claim 1, **characterized in that** the scanner (35) is inserted into a socket rigidly connected to the first housing section (1).

3. A module according to claims 1 or 2, **characterized in that** the ring wall (1) is provided with a circumferential groove (39) engaged by the locking hooks (38).

4. A module according to any one of the preceding claims, **characterized in that** the circular code disk (2) includes a central circular passageway (23) conforming to the bottom hole (22), from the edge of which the locking struts (4) are projecting, with circular sector-shaped support walls (24) standing between the locking struts arranged in groups on the circular edge of the passageway, with the support walls (24) carrying circular-sector-shaped transport ears (4, 5) protruding into the circular hole (22).

5. A module according to any one of claims 2 through 4, **characterized in that** the socket (35) of the scanner accommodates a plurality of light sources and a plurality of detectors associated thereto within accommodating bays arranged in three rows in a circular sector-shaped way, that the socket (35), within the walls of the accommodating bays, are provided with slot-type holes for transmitting and receiving of light rays, and that the socket (35) comprises circular sector-shaped grooves open at the front faces in which openings arranged radially opposite one another are terminating, and which accommodate circularly moving projections (31, 32) of the code and incremental tracks of the code disk (2).

6. A module according to any one of the preceding claims, **characterized in that** stepped centering pins (33) are provided on a housing bottom (1), centering the printed circuit board (34) surrounding the code disk and holding it in spaced relationship from the housing bottom (1).

7. A module according to any one of the preceding claims, **characterized in that** a bay (36) is formed in a housing bottom (1) wherein the printed circuit board adapted to be associated to the light sources and detectors, and the socket (35) can be centrally stacked, and wherein preferably the socket (35) and/or the printed circuit board, can be additionally centered through the bay walls.

## Revendications

1. Module d'un capteur d'angle de braquage comportant un boîtier comportant une première partie de boîtier, notamment un fond du boîtier (1), une seconde partie de boîtier, notamment un couvercle de boîtier (37), et un disque de code rotatif (2), qui est monté dans le boîtier, un circuit électrique (34) ainsi qu'au moins un dispositif d'exploration (35) qui explore le disque de code (2), **caractérisé en ce que** le disque de code (2) est monté directement, de manière à pouvoir tourner, sur la première partie (1) du boîtier, à distance de cette dernière et que la première partie (1) du boîtier possède une ouverture de forme circulaire (22), au niveau du bord de laquelle une paroi annulaire est tournée vers l'intérieur du boîtier, que le disque de code (2) prend appui sur la surface frontale, qui est tournée vers l'intérieur du boîtier, de la paroi annulaire (21) et que des bras d'encliquetage (4), qui font saillie à partir du disque de code (2), s'accrochent au-dessus de la paroi annulaire (21) par des crochets d'encliquetage (38) qui sont dirigés radialement vers l'extérieur, sur la surface extérieure (39) de la première partie (1) du boîtier.

2. Module selon la revendication 1, **caractérisé en ce que** le dispositif d'exploration (35) est inséré dans une monture reliée de façon fixe à la première partie (1) du boîtier.

3. Module selon la revendication 1 ou 2, **caractérisé en ce que** la paroi annulaire (1) est pourvue d'une gorge périphérique (39), dans laquelle s'engagent les crochets d'encliquetage (38).

4. Module selon l'une des revendications précédentes, **caractérisé en ce que** le disque de code de forme circulaire (2) possède un passage central circulaire (23), qui correspond à l'ouverture de fond (22) et à partir du bord duquel font saillie les bras d'encliquetage (4), tandis qu'entre les bras d'encliquetage disposés selon des groupes sur le bord de forme circulaire du passage font saillie des parois de support (24) en forme de secteurs circulaires, qui portent des oeillets de transport (4, 5) en forme de secteurs circulaires, qui pénètrent dans l'ouverture circulaire (22).

5. Module selon l'une des revendications 2 à 4, **caractérisé en ce que** la monture (35) du dispositif d'exploration loge plusieurs sources de lumière et plusieurs détecteurs, qui sont associés à ces sources, dans des cavités de réception, qui sont disposées suivant trois rangées, sous la forme de secteurs circulaires, que la monture (35) possède des ouvertures en forme de fentes, situées dans les parois des cavités de réception, pour l'émission et la réception d'un rayonnement lumineux et que la monture (35) comporte des gorges en forme de secteurs circulaires, qui sont ouvertes dans les faces frontales et dans lesquelles débouchent les ouvertures opposées radialement en vis-à-vis et qui reçoivent des parties saillantes (31, 32), qui se déplacent sur une trajectoire circulaire, de la piste de code ou de la piste incrémentale du disque de code (2).

6. Module selon l'une des revendications précédentes, **caractérisé en ce que** sur un fond (1) du boîtier sont prévues des broches de centrage étagées (33), au moyen desquelles la plaquette à circuits imprimés (34), qui entoure le disque de code est centrée et retenue à distance du fond (1) du boîtier.

7. Module selon l'une des revendications précédentes, **caractérisé en ce que** dans un fond (1) du boîtier est formée une cavité (36), dans laquelle peuvent être empilées une plaquette à circuits imprimés pouvant être associée aux sources de lumière et aux détecteurs, et la monture (35), de préférence la monture (35) et/ou la plaquette à circuits imprimés pouvant être centrées en supplément par les parois de la cavité.
